# EUROPÄISCHE PATENTSCHRIFT

(11) **EP 3 227 863 B1**
(45) Veröffentlichungstag und Bekanntmachung des Hinweises auf die Patenterteilung: **30.09.2020**
(21) Anmeldenummer: 15775228.8
(22) Anmeldetag: 08.10.2015
(51) Int. Cl.: G07C 9/00, H01M 2/10, H01R 4/48

(54) **KRAFTFAHRZEUGSCHLÜSSEL**
MOTOR VEHICLE KEY
CLÉ DE VÉHICULE AUTOMOBILE

(30) Priorität: 04.12.2014 DE 102014117873; 31.03.2015 DE 102015105009
(43) Veröffentlichungstag der Anmeldung: 11.10.2017
(73) Patentinhaber: Huf Hülsbeck & Fürst GmbH & Co. KG, 42551 Velbert (DE)
(72) Erfinder: BORGMANN, Frank, 42283 Wuppertal (DE); WIECZOREK, Roland, 42549 Velbert (DE); GENTER, Julian, 44892 Bochum (DE)
(74) Vertreter: Zenz Patentanwälte Partnerschaft mbB
(86) Internationale Anmeldenummer: PCT/EP2015/073209
(87) Internationale Veröffentlichungsnummer: WO 2016/087093

(56) Entgegenhaltungen:
- DE-A1-102012 015 668
- DE-T2- 69 921 572
- JP-A- H0 644 953
- JP-B2- 3 338 576
- US-A- 4 888 970
- US-A- 5 876 241
- US-A1- 2013 329 407

## Beschreibung

Die Erfindung richtet sich auf einen Kraftfahrzeugschlüssel, insbesondere einen flach bauenden Kraftfahrzeugschlüssel, mit einem Gehäuse, einer in dem Gehäuse untergebrachten Leiterplatte, auf welcher zumindest ein elektronisches Bauteil befestigt ist, zumindest einem mit der Leiterplatte in Wirkverbindung stehenden Tastenelement, das an dem Gehäuse angebracht ist, einer elektrischen Energiequelle zum Betrieb des zumindest einen elektronischen Bauteils und einem ersten Kontaktelement und einem zweiten Kontaktelement, die die elektrische Energiequelle mit der Leiterplatte elektrisch koppeln, wobei die elektrische Energiequelle seitlich neben der Leiterplatte angeordnet ist und die elektrische Energiequelle sich in Bezug auf die Höhenrichtung des Kraftfahrzeugschlüssels zumindest über einen Höhenteilabschnitt der Leiterplatte erstreckt, und wobei das erste Kontaktelement einen Kontaktabschnitt mit elastisch bewegbaren Kontaktflügeln aufweist, welche die elektrische Energiequelle an einem Oberflächenabschnitt kontaktieren.

Ein Kraftfahrzeugschlüssel der Eingangs bezeichneten Art ist zum Beispiel aus der US 4,888,970 bekannt.

Ferner ist ein Kraftfahrzeugschlüssel zum Beispiel aus der DE 699 21 572 T2 und der DE 10 2012 106 622 A1 bekannt, wobei insbesondere aus der DE 10 2012 106 622 A1 bekannt ist, dass solche Kraftfahrzeugschlüssel üblicherweise eine Leiterplatte umfassen, auf welcher zumindest ein elektronisches Bauteil, wie beispielsweise eine Sender- und Empfängereinheit, montiert ist. Mit Hilfe des elektronischen Bauteils können zum Beispiel die Türen eines Kraftfahrzeugs entriegelt und verriegelt werden. Neben diesen grundlegenden Funktionalitäten des elektronischen Bauteils werden mittlerweile zunehmend weitere Funktionalitäten gefordert, so dass die Notwendigkeit bestand, die Energieversorgung der auf der Leiterplatte montierten elektronischen Bauteile entsprechend anzupassen und zu vergrößern. In dem Kraftfahrzeugschlüssel ist zur Energieversorgung der elektronischen Bauteile üblicherweise eine über der Leiterplatte angeordnete, austauschbare elektrische Energiequelle vorgesehen, die über Kontaktelemente mit der Leiterplatte und damit auch mit den elektronischen Bauteilen gekoppelt ist. Die Energiequelle kann nach Art einer Batterie austauschbar oder nach Art eines Akkus fest in dem Kraftfahrzeugschlüssel installiert sein. Die Kontaktelemente sind dabei auf der Leiterplatte selbst angebrachten und werden von der Leiterplatte abgestützt. Der steigende Energiebedarf der elektronischen Bauteile bewirkt, dass eine größere elektrische Energiequelle benötigt wird, was letztlich zu einem Anstieg der Bauhöhe des Kraftfahrzeugschlüssels führt. Da bei den bekannten Kraftfahrzeugschlüsseln die elektrische Energiequelle in Form einer Batterie oder eines Akkus regelmäßig auf einem Federelement gelagert ist, welches die über der Leiterplatte gelagerte Energiequelle gegen einen Anschlag innerhalb des Kraftfahrzeugschlüssels drückt, ist eine Mindestbauhöhe des Kraftfahrzeugschlüssels vorgegeben. Jedoch vermindert eine übermäßige Bauhöhe den Benutzungskomfort sowie eine kompakte Bauweise ("schlankes" Design) und verhindert ein bequemes und wenig Platz einnehmendes Mitführen des Kraftfahrzeugschlüssels.

Der Erfindung liegt die Aufgabe zugrunde eine Lösung zu schaffen, die auf konstruktiv einfache Weise und kostengünstig einen Kraftfahrzeugschlüssel bereitstellt, der eine geringe Bauhöhe aufweist und einen gesteigerten Benutzungskomfort sowie eine erhöhte Anmutung bietet.

Bei einem Kraftfahrzeugschlüssel der Eingangs bezeichneten Art wird die Aufgabe erfindungsgemäß dadurch gelöst, dass sich zwischen dem Kontaktabschnitt des ersten Kontaktelements und der Leiterplatte eine freitragende Brückenleitung erstreckt, welche an der Leiterplatte befestigt ist und den Kontaktabschnitt und die Leiterplatte elektrisch verbindet, wobei die freitragende Brückenleitung einen Höhenunterschied zwischen dem Kontaktabschnitt und der Leiterplatte überbrückt, wobei eine Stützgeometrie den Kontaktabschnitt des ersten Kontaktelements derart abstützt, dass die Stützgeometrie die freitragende Brückenleitung vor Beschädigung, Deformation oder unerwünschter Verbiegung schützt, und wobei die Stützgeometrie, das erste Kontaktelement, das zweite Kontaktelement und die Leiterplatte eine gemeinsam transportierbare und verbaubare Unterbaugruppe bilden, welche in das Gehäuseelement eingebaut ist.

Vorteilhafte und zweckmäßige Ausgestaltungen und Weiterbildungen der Erfindung ergeben sich aus den Unteransprüchen.

Durch die Erfindung wird ein Kraftfahrzeugschlüssel zur Verfügung gestellt, der sich durch eine funktionsgerechte Konstruktion auszeichnet und einen einfachen und kostengünstigen Aufbau aufweist. Dadurch, dass die elektrische Energiequelle seitlich neben der Leiterplatte angeordnet ist und dass die elektrische Energiequelle und die Leiterplatte zumindest abschnittsweise auf der gleichen Ebene in Höhenrichtung angeordnet sind, ist eine Einsparung der Bauhöhe möglich. Leiterplatte und Energiequelle erstrecken sich folglich in Höhenrichtung parallel zueinander, so dass sich deren einzelne Bauhöhen nicht mehr aufaddieren, wie es im Stand der Technik bislang der Fall war. Vielmehr ist dasjenige Bauteil der beiden maßgebend, welches die größere Dicke bzw. Höhenerstreckung aufweist. Üblicherweise weist die scheibenförmig ausgebildete Energiequelle im Allgemeinen eine größere Höhenerstreckung als die Leiterplatte auf, so dass sich die Bauhöhe des Kraftfahrzeugschlüssels an der Dicke der Energiequelle orientiert. Auf diese Weise ist es möglich, einen Kraftfahrzeugschlüssel zu bauen, der eine extrem geringe Dicke aufweist und dadurch bequem zum Beispiel in der Jackentasche von einem Benutzer mitgeführt werden kann, ohne dass die Mitnahme als störend empfunden wird. Aufgrund der elastischen Ausbildung der Kontaktflügel des Kontaktabschnitts ist stets ein sicherer Kontakt zu der elektrischen Energiequelle gewährleistet. Damit die Kontaktflügel auch sicher die elektrische Energiequelle kontaktieren und eine elektrische Verbindung hergestellt ist, sieht die Erfindung vor, dass eine Stützgeometrie den Kontaktabschnitt des ersten Kontaktelements abstützt. Die Stützgeometrie führt und hält gleichzeitig den Kontaktabschnitt in Position und schützt den Kontaktabschnitt vor Beschädigung.

Von besonderem Vorteil für die Erfindung ist es, dass die Stützgeometrie, das erste Kontaktelement, das zweite Kontaktelement und die Leiterplatte eine gemeinsam transportierbare und verbaubare Unterbaugruppe bilden. Dadurch kann diese Unterbaugruppe von einem Zulieferer hergestellt und zur Endmontage geliefert werden, ohne dass die Gefahr einer Beschädigung der Kontaktelemente gegeben wäre.

Bekannt ist es, dass die Verbindungsleitungen der Kontaktelemente und die Kontaktelemente selbst auf der Leiterplatte angebracht sind bzw. sich auf dieser abstützen. Im Gegensatz zu dieser aus dem Stand der Technik bekannten Maßnahme sieht die Erfindung vor, dass sich zwischen dem Kontaktabschnitt des ersten Kontaktelements und der Leiterplatte eine freiliegende und/oder freitragende Brückenleitung erstreckt, welche an der Leiterplatte befestigt ist und den Kontaktabschnitt und die Leiterplatte elektrisch verbindet.

Die Brückenleitung überbrückt die Höhendifferenz zwischen der Leiterplatte und dem Kontaktabschnitt, welcher eine Seitenfläche der Energiequelle kontaktiert, die auf einer anderen Höhenebene als die Seitenfläche der Leiterplatte liegt.

Eine besonders einfache und kostengünstige Möglichkeit, eine zur Abstützung und zum Schutz vor Beschädigungen dienende Stützgeometrie zu realisieren, besteht darin, dass die Stützgeometrie von wenigstens einer Innenseite eines Gehäuseelements gebildet ist. Bei dieser Möglichkeit, die nicht von der Erfindung wie beansprucht abgedeckt wird, wird kein weiteres Bauteil benötigt, um die Stützgeometrie zu verwirklichen. Vielmehr wird auf vorhandene Bauteile zurückgegriffen, welche die Stützgeometrie ausbilden.

Selbstverständlich besteht in einer alternativen Ausgestaltung auch die Möglichkeit, dass die Stützgeometrie ein Stützbügel ist, der an wenigstens einem Gehäuseelement befestigbar oder abstützbar ist. Dabei kann sich der Stützbügel in Breitenrichtung des Kraftfahrzeugschlüssels erstrecken. Dadurch, dass die Stützgeometrie als separates Bauteil und nicht als Teil eines Gehäuseelements ausgebildet ist, bestehen viel mehr Freiheiten hinsichtlich der konstruktiven Ausgestaltung. Beispielsweise kann der Stützbügel aus einem sehr standfesten Material gefertigt sein, um die gewünschte Stabilisierung und Stützwirkung zu erzielen. Der Stützbügel kann ferner an einem Gehäuseelement befestigt werden oder sich nur an einem solchen Gehäuseelement abstützen.

Die Erfindung sieht in weiterer Ausgestaltung vor, dass die Leiterplatte und die Stützgeometrie über eine formschlüssige und/oder kraftschlüssige und/oder stoffschlüssige Verbindung, vorzugsweise eine Heißverstemm-Verbindung, miteinander verbunden sind. Das Heißverstemmen stellt eine kostengünstige Alternative zum Kleben, Nieten und Verschrauben dar.

Eine besonders einfache Möglichkeit, die Leiterplatte mit dem daran befestigten Stützbügel an dem Gehäuseelement zu fixieren, besteht in Ausgestaltung der Erfindung darin, dass die Stützgeometrie mit dem Gehäuseelement über eine Rastverbindung verbunden ist. Alternativ ist es auch vorstellbar, dass eine Verbindung gewählt wird, die durch Quetschung des Materials der Stützgeometrie und des Gehäuseelements gebildet ist.

Als Alternative zum Kleben, Nieten und Verschrauben sieht die Erfindung in weiterer Ausgestaltung vor, dass der Kontaktabschnitt des ersten Kontaktelements über eine formschlüssige und/oder kraftschlüssige und/oder stoffschlüssige Verbindung, vorzugsweise eine Heißverstemm-Verbindung, mit der Stützgeometrie verbunden ist.

Zur Erhöhung der Flexibilität der Kopplung von erstem Kontaktelement und Leiterplatte sieht die Erfindung in weiterer Ausgestaltung vor, dass das mit der Leiterplatte verbundene Ende der Brückenleitung eine U-förmig ausgebildete Kantung aufweist, von der der von dem Kontaktabschnitt weg weisende Schenkel an der Leiterplatte, vorzugsweise über eine Lötverbindung, befestigt ist. Diese Ausgestaltung bietet vorteilhafterweise einen Toleranzausgleich bei der Montage.

Ferner ist es in weiterer Ausgestaltung der Erfindung von Vorteil, wenn das zweite Kontaktelement federnd und spangenförmig ausgebildete Kontaktarme aufweist, welche die elektrische Energiequelle an einem Umfangsabschnitt kontaktieren. Somit ist mit den ersten und zweiten Kontaktelementen neben der elektrischen Verbindung die Energiequelle an zumindest zwei Seiten abgestützt.

Eine konstruktiv einfache Möglichkeit zur Fixierung des zweiten Kontaktelements besteht in Ausgestaltung des erfindungsgemäßen Kraftfahrzeugschlüssels darin, dass das zweite Kontaktelement an einer Längskante der Leiterplatte befestigt ist, wobei die Leiterplatte die Kontaktarme abstützt.

Die Erfindung sieht in weiterer Ausgestaltung vor, dass der Höhenteilabschnitt der Dicke der Leiterplatte entspricht. Diese Ausgestaltung führt zu der geringsten Bauhöhe, da sich hierbei die Leiterplatte in Höhenrichtung nicht über die Dicke der Energiequelle hinaus erstreckt.

Hinsichtlich einer geringen Bauhöhe des erfindungsgemäßen Kraftfahrzeugschlüssels ist es von besonderem Vorteil, wenn die elektrische Energiequelle eine Batterie ist, die vorzugsweise scheibenförmig ausgebildet ist. Beispielsweise kann die Batterie eine Knopfzelle sein, die besonders flach ausgebildet ist.

Schließlich sieht die Erfindung in Ausgestaltung der Erfindung vor, dass die Leiterplatte über eine formschlüssige und/oder kraftschlüssige und/oder stoffschlüssige Verbindung, vorzugsweise eine Heißverstemm-Verbindung, mit dem wenigstens einen Gehäuseelement verbunden ist.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft bevorzugte Ausführungsbeispiele der Erfindung dargestellt sind. In der Zeichnung zeigt:
Figur 1 einen erfindungsgemäßen Kraftfahrzeugschlüssel in perspektivischer Ansicht,
Figur 2 eine perspektivische Einzelteildarstellung des erfindungsgemäßen Kraftfahrzeugschlüssels gemäß einer ersten Ausführungsform, die nicht von der Erfindung wie beansprucht abgedeckt wird,
Figur 3 eine perspektivische Ansicht einer Unterbaugruppe des Kraftfahrzeugschlüssels gemäß der ersten Ausführungsform,
Figur 4 eine Leiterplatte und Kopplungselemente des Kraftfahrzeugschlüssels gemäß der ersten Ausführungsform in Perspektivansicht,
Figur 5 eine weitere Perspektivansicht der Leiterplatte aus Figur 4,
Figur 6 eine vergrößerte Darstellung für die Bauteile aus Figur 5,
Figur 7 eine Seitenansicht auf die einzelnen Bauteile, die in Figur 5 und 6 dargestellt sind,
Figur 8 eine schematische und perspektivische Darstellung des erfindungsgemäßen Kraftfahrzeugschlüssels gemäß einer zweiten Ausführungsform,
Figur 9 eine perspektivische Einzelteildarstellung des erfindungsgemäßen Kraftfahrzeugschlüssels gemäß der zweiten Ausführungsform,
Figur 10 eine perspektivische Ansicht auf eine Leiterplatte und Kopplungselemente der zweiten Ausführungsform,
Figur 11 die in Figur 10 dargestellten Bauteile zusammen mit einem Stützbügel einer Stützgeometrie,
Figur 12 eine andere Perspektivansicht der in Figur 10 gezeigten Darstellung für eine Unterbaugruppe des Kraftfahrzeugschlüssels,
Figur 13 eine Unteransicht der in Figur 8 gezeigten Darstellung der zweiten Ausführungsform,
Figur 14 eine Einzelteildarstellung von Leiterplatte, Kopplungselementen und Stützbügel der zweiten Ausführungsform,
Figur 15 eine perspektivische Ansicht eines ersten Kopplungselements mit einer vergrößerten Darstellung eines mit der Leiterplatte zu verbindenden Endes und
Figur 16 eine Seitenansicht auf die Bauteile, die in Figur 12 dargestellt sind.

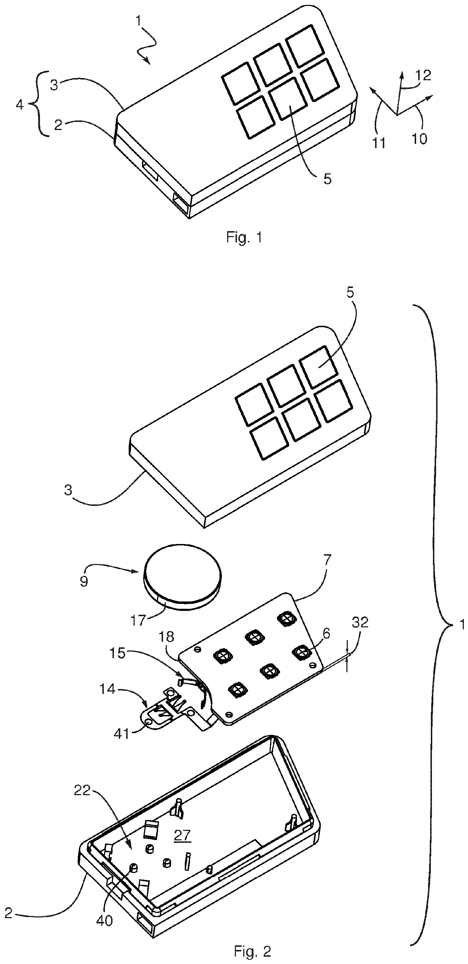

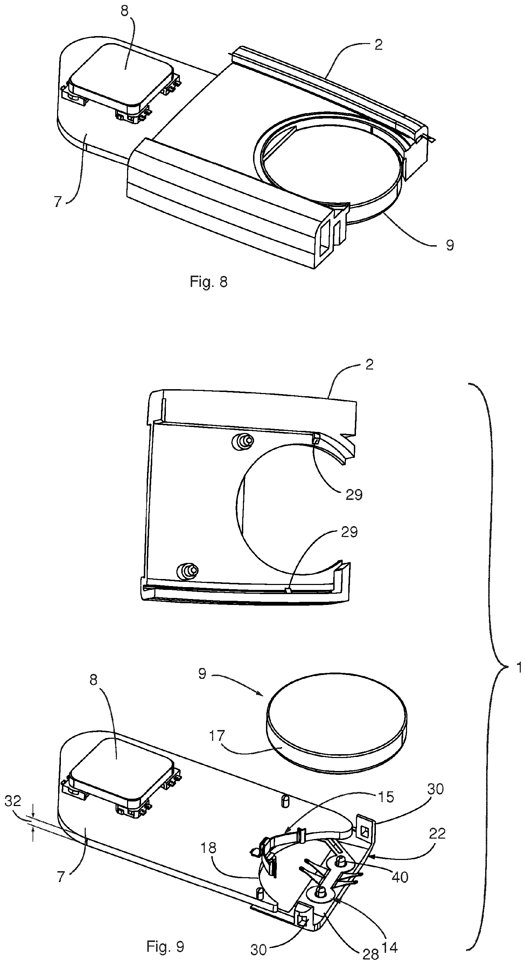

In Figur 1 ist ein erfindungsgemäßer Kraftfahrzeugschlüssel 1 in perspektivischer Ansicht dargestellt, wobei bei dem eingezeichneten Koordinatensystem der Pfeil 10 die Längsrichtung des Kraftfahrzeugschlüssels 1, der Pfeil 11 die Breitenrichtung des Kraftfahrzeugschlüssels 1 und der Pfeil 12 die Höhenrichtung des Kraftfahrzeugschlüssels 1 anzeigen. Der in Figur 1 gezeigte Kraftfahrzeugschlüssel 1 entspricht in seiner äußeren Erscheinungsform einer ersten und einer zweiten Ausführungsform des Kraftfahrzeugschlüssels 1, wobei sich die beiden Ausführungsformen nicht im äußeren Erscheinungsbild sondern in dem Innenleben des Kraftfahrzeugschlüssels 1 unterscheiden, wie nachstehend noch im Detail beschrieben wird. Die Figuren 2 bis 7 beziehen sich auf die erste Ausführungsform, die nicht von der Erfindung wie beansprucht abgedeckt wird, wohingegen die Figuren 8 bis 16 auf die zweite Ausführungsform gerichtet sind.

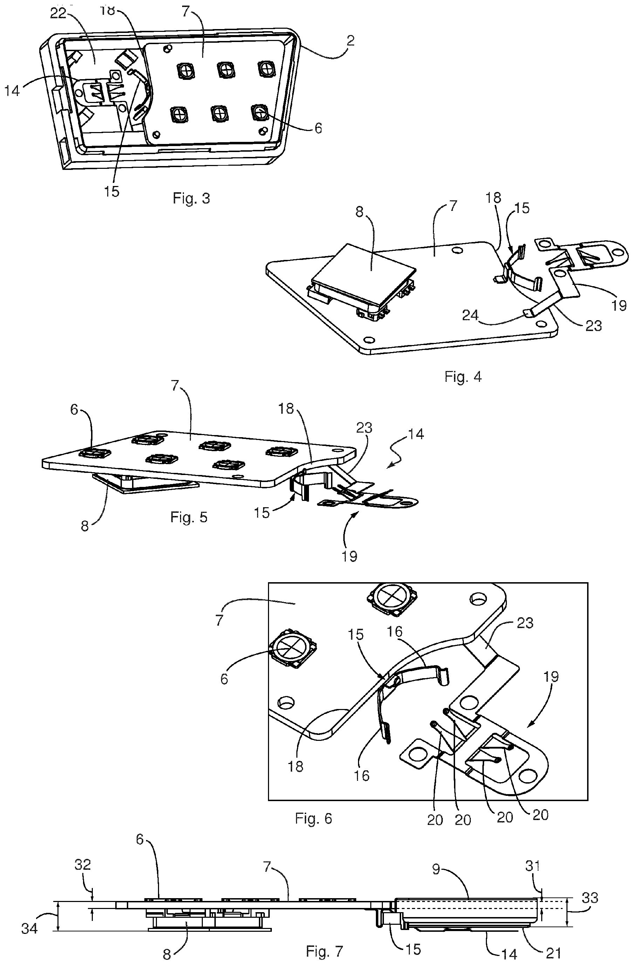

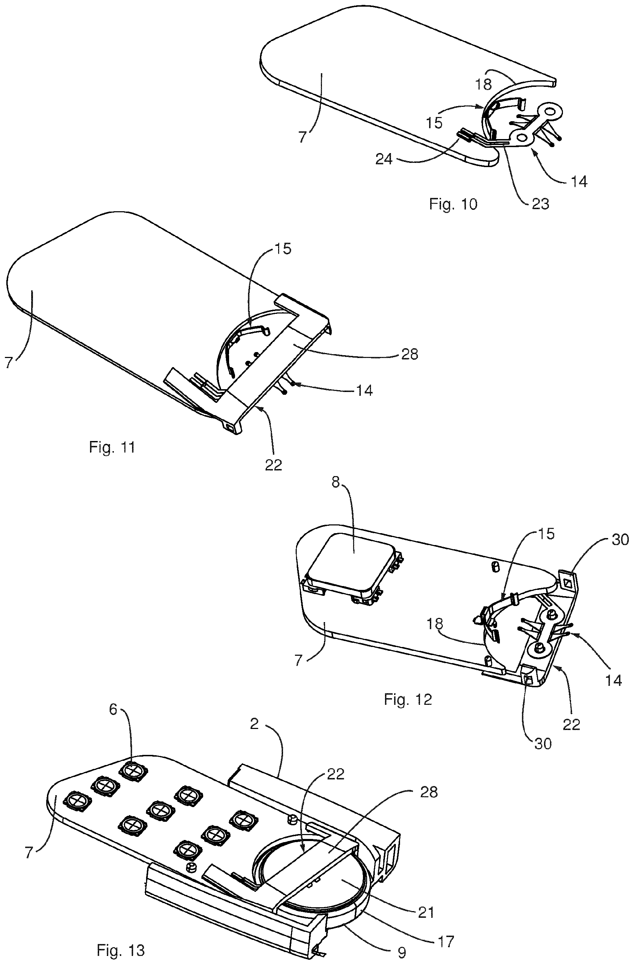

Mit Bezug auf die Figuren 1 bis 16 weist bei beiden Ausführungsformen der Kraftfahrzeugschlüssels 1 ein Gehäuseelement 2, welches mit einer Abdeckung 3 ein dielektrisches Gehäuse 4 des Kraftfahrzeugschlüssels 1 bildet, und Tastenelemente 5 auf. Für die zweite Ausführungsform ist auf eine Darstellung der Abdeckung 3 verzichtet worden, so dass in diesen Darstellungen auch das Merkmal der Tastenelemente 5 nicht gezeigt ist. Dennoch sind die Abdeckung 3, die zusammen mit dem Gehäuseelement 4 das Gehäuse 4 bildet, auch Bestandteil des Kraftfahrzeugschlüssels 1 der zweiten Ausführungsform. Die nur für die erste Ausführungsform gezeigten Tastenelemente 5 stehen über in beiden Ausführungsformen gezeigte Drucktaster 6 (siehe zum Beispiel Figuren 2 und 13) in Wirkverbindung mit einer Leiterplatte 7, die an dem Gehäuseelement 2 angebracht ist. Auf der Leiterplatte 7 ist exemplarisch ein elektronisches Bauteil 8 (siehe zum Beispiel Figur 4 oder Figur 9) befestigt. Wie in der Einleitung bereits beschrieben wurde, können mit Hilfe des elektronischen Bauteils 8 zum Beispiel die Türen eines Kraftfahrzeugs entriegelt und verriegelt werden. Da es sich um allgemein bekannte Funktionen handelt, die ein moderner Kraftfahrzeugschlüssel mit Hilfe von elektronischen Bauteilen bewirken kann, wird auf eine diesbezügliche Vertiefung verzichtet. Bei den beiden in den Figuren gezeigten Ausführungsformen weist der Kraftfahrzeugschlüssel 1 ferner jeweils eine elektrische Energiequelle 9 zum Betrieb des elektronischen Bauteils 8 auf. Die elektrische Energiequelle 9 ist in den beiden Ausführungsformen als eine scheibenförmige Batterie nach Art einer Knopfzelle ausgebildet. Ferner weisen beide Ausführungsformen des Kraftfahrzeugschlüssels 1 ein erstes Kontaktelement 14 und ein zweites Kontaktelement 15 auf, die dazu dienen, die elektrische Energiequelle 9 mit der Leiterplatte 7 elektrisch zu koppeln.

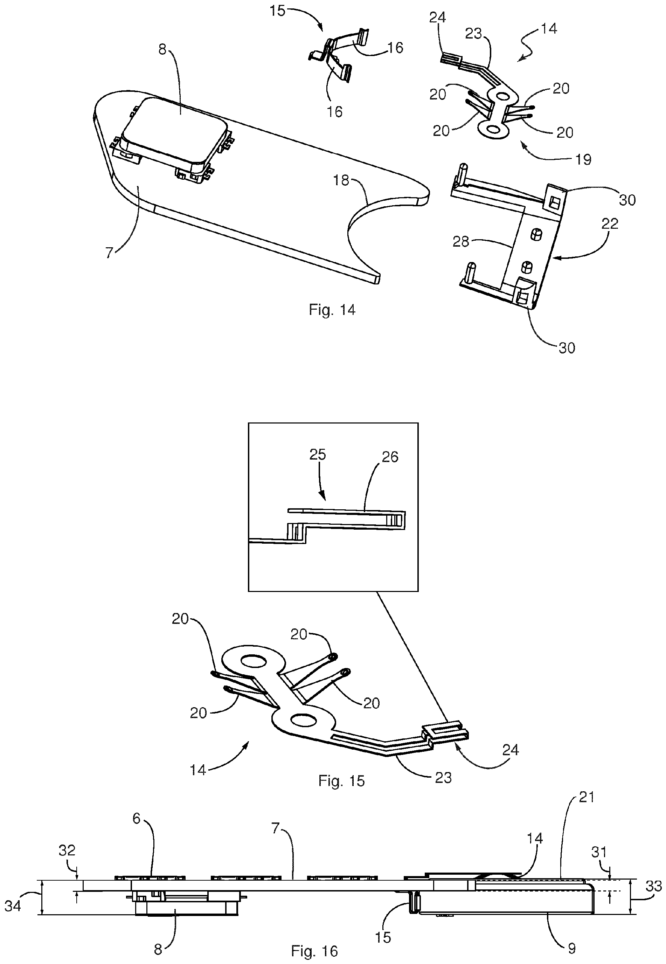

Bei beiden Ausführungsformen des Kraftfahrzeugschlüssels 1 weist das zweite Kontaktelement 15 federnd und spangenförmig ausgebildete Kontaktarme 16 auf (siehe zum Beispiel Figuren 6 und 14), die an einem Umfangsabschnitt 17 der elektrischen Energiequelle 9 anliegen und dort eine positive Elektrode der elektrischen Energiequelle 9 kontaktieren. Dabei ist das zweite Kontaktelement 16 an einer Längskante 18 der Leiterplatte 7 befestigt. Durch diese Art der Befestigung an der Längskante 18 stützt die Leiterplatte 7 die Kontaktarme 16 ab.

Ferner weist mit Bezug auf die Figuren 1 bis 16 bei beiden Ausführungsformen das erste Kontaktelement 14 einen Kontaktabschnitt 19 mit elastisch bewegbaren Kontaktflügeln 20 auf (siehe zum Beispiel Figuren 6 und 14). Die Kontaktflügel 20 kontaktieren die elektrische Energiequelle 9 an einem ihrer beiden Oberflächenabschnitte 21 (siehe beispielsweise Figuren 7 und 16), der eine negative Elektrode der elektrischen Energiequelle 9 darstellt.

Bei beiden Ausführungsformen stützt eine Stützgeometrie 22 den Kontaktabschnitt 19 des ersten Kontaktelements 14 ab. Die Stützgeometrie 22 ist erforderlich, da sonst die Gefahr bestehen würde, dass kein dauerhafter Kontakt zwischen der elektrischen Energiequelle 9 und dem ersten Kontaktelement 14 gewährleistet ist. Denn bei beiden Ausführungsformen ist der Kontaktabschnitt 19 des ersten Kontaktelements 14 über eine Brückenleitung 23 mit der Leiterplatte 7 elektrisch verbunden. Die Brückenleitung 23 liegt frei bzw. ist frei tragend, d.h. die Brückenleitung 23 liegt weder an der Leiterplatte 7 auf noch stützt sie sich an der Stützgeometrie 22 ab. Vielmehr erstreckt die Brückenleitung 23 sich frei tragend zwischen dem Kontaktabschnitt 19 des ersten Kontaktelements 14 und der Leiterplatte 7, um die Leiterplatte 7 und den Kontaktabschnitt 19 elektrisch zu verbinden. Das mit der Leiterplatte 7 verbundene Ende 24 der Brückenleitung 23 ist in den beiden Ausführungsbeispielen auf der Leiterplatte 7 angelötet, wobei auch alternative Verbindungsmöglichkeiten denkbar sind.

Bei der zweiten Ausführungsform, die in den Figuren 8 bis 16 gezeigt ist, weist zur Erhöhung der Flexibilität der Verbindung das mit der Leiterplatte 7 verbundene Ende 24 der Brückenleitung 23 eine U-förmig ausgebildete Kantung 25 auf (siehe zum Beispiel Figur 15). Von der Kantung 25 ist der von dem Kontaktabschnitt 19 weg weisende Schenkel 26 der Kantung 25 an der Leiterplatte 7 über die vorstehend genannte Lötverbindung befestigt. Bei der ersten Ausführungsform weist das Ende 24, welches mit der Leiterplatte 7 über eine Lötverbindung elektrisch verbunden ist, keine Kantung auf, wobei es selbstverständlich auch denkbar wäre, das Ende 24 der Brückenleitung 23 mit einer solchen Kantung zu versehen.

Bei der ersten, nicht beanspruchten, Ausführungsform, die in den Figuren 2 bis 7 gezeigt ist, ist die Stützgeometrie 22 gleich der Innenseite 27 des Gehäuseelements 2 (siehe zum Beispiel Figur 2). Wie Figur 3 zeigt, liegt der Kontaktabschnitt 19 des ersten Kontaktelements 14 auf der Innenseite 27 auf. Anders ausgedrückt, stützt die Innenseite 27 den Kontaktabschnitt 19 des Kontaktelements 14 ab. Dabei bilden die an der Leiterplatte 7 befestigten ersten und zweiten Kontaktelemente 14, 15 zusammen mit der Leiterplatte 7 und dem Gehäuseelement 2, das als Stützgeometrie 22 für das erste Kontaktelement 14 dient, eine Unterbaugruppe. Bei dieser Unterbaugruppe ist das Brückenelement 23 des ersten Kontaktelements 14 durch die Stützgeometrie 22 geschützt. Das erste Kontaktelement 14 ist bei der ersten Ausführungsform mittels einer Heißstemm-Verbindung an der Innenseite 27 des Gehäuseelements 2 angebracht, wobei zu diesem Zweck ein stiftförmiger Pinn 40 vorgesehen ist, der zur Herstellung der Heißstemm-Verbindung durch die Öffnung 41 in dem ersten Kontaktelement 14 gesteckt ist und anschließend plastisch verformt wird.

Demgegenüber ist bei der zweiten Ausführungsform, die in den Figuren 8 bis 16 gezeigt ist, die Stützgeometrie 22 ein Stützbügel 28, der sich in Breitenrichtung 11 des Kraftfahrzeugschlüssels 1 erstreckt. Auf dem Stützbügel 28 liegt der Kontaktabschnitt 19 des ersten Kontaktelements 14 auf und stützt sich an dem Stützbügel 28 ab, wenn die elektrische Energiequelle 9 auf die Kontaktflügel 20 drückt. Bei der dargestellten zweiten Ausführungsform ist der Kontaktabschnitt 19 des ersten Kontaktelements 14 über eine Heißverstemm-Verbindung mit der Stützgeometrie 22 verbunden, durch die eine formschlüssige und kraftschlüssige Verbindung hergestellt ist, die sogar zusätzlich stoffschlüssig sein kann. Für die Heißstemm-Verbindung ist ebenfalls wie bei der ersten Ausführungsform ein stiftförmiger Pinn 40 vorgesehen, der hierbei aber auf dem Stützbügel 28 angeformt ist und durch eine entsprechende Öffnung in dem ersten Kontaktelement 14 gesteckt ist, bevor die Heißstemm-Verbindung durch plastische Verformung des Pinns 40 erzeugt wird. Dementsprechend wird sowohl bei der ersten als auch bei der zweiten Ausführungsform die Heißstemm-Verbindung von einem stiftförmigen Pinn 40 der Stützgeometrie und einer in dem ersten Kontaktelement 14 ausgeformten Öffnung 41 gebildet, wobei die Verbindung durch plastische Verformung des Pinns 40 hergestellt ist. Bei der zweiten Ausführungsform sind ferner die Leiterplatte 7 und der Stützbügel 28 der Stützgeometrie 22 über eine formschlüssige und kraftschlüssige Heißverstemm-Verbindung miteinander verbunden, wobei auch diese Verbindung zusätzlich stoffschlüssig sein kann. Der Stützbügel 28 der Stützgeometrie 22 ist bei der zweiten Ausführungsform darüber hinaus an dem Gehäuseelement 2 befestigt. Die Befestigung der Stützgeometrie 22 bzw. des Stützbügels 28 an dem Gehäuseelement 2 erfolgt über eine Rastverbindung, die von jeweiligen auf der Innenseite des Gehäuseelements 2 ausgebildeten Rasthaken 29 und von entsprechenden an dem Stützbügel 28 ausgeformten Rastaufnahmen 30 gebildet ist. Zur Verbindung wird der Stützbügel 28 in das Gehäuseelement 2 hineingedrückt, wodurch die Rasthaken 29 in die Rastaufnahmen 30 schnappen und eine formschlüssige Verbindung herstellen. Auch bei der zweiten Ausführungsform bilden die Stützgeometrie 22, das erste Kontaktelement 14, das zweite Kontaktelement 15 und die Leiterplatte 7 eine gemeinsam transportierbare und verbaubare Unterbaugruppe, die im Gegensatz zur ersten Ausführungsform zu einem späteren Zeitpunkt in das Gehäuseelement 2 eingebaut werden kann.

Bei beiden Ausführungsformen des Kraftfahrzeugschlüssels 1 führt und stützt die Stützgeometrie 22 das erste Kontaktelement 14. Insbesondere schützt die Stützgeometrie 22 die freitragende Brückenleitung 23 vor Beschädigung, Deformation oder unerwünschter Verbiegung, wobei der Ausdruck "freitragend" so zu verstehen ist, dass sich die Brückenleitung 23 von dem Kontaktabschnitt 19 bis zur Leiterplatte 7 erstreckt, ohne auf diesem Abschnitt gestützt zu sein oder an irgendeinem anderen Bauteil an- oder aufzuliegen. Die Brückenleitung 23 hängt vielmehr auf diesem Abschnitt zwischen der Leiterplatte 7 und dem Kontaktabschnitt 19 "in der Luft".

Die Brückenleitung 23 dient bei beiden Ausführungsformen des erfindungsgemäßen Kraftfahrzeugschlüssels 1 dazu, die Höhendifferenz bzw. den Höhenunterschied zwischen der Leiterplatte 7, an welchem das Ende 24 des ersten Kontaktelements 14 befestigt ist, und dem Kontaktabschnitt 19, welcher die Seitenfläche 21 der Energiequelle 9 kontaktiert, zu überbrücken. Denn die Verbindung des Endes 24 des ersten Kontaktelements 14 mit der Leiterplatte 7 liegt auf einer anderen Höhenebene als der die Seitenfläche 21 der elektrischen Energiequelle 9 kontaktierende Kontaktabschnitt 19 mit den Kontaktflügeln 20.

Um die Bauhöhe des Kraftfahrzeugschlüssels 1 gering zu halten und auf ein Mindestmaß zu begrenzen, ist bei beiden Ausführungsformen die elektrische Energiequelle 9 nicht oberhalb oder unterhalb der Leiterplatte 7 sondern seitlich neben der Leiterplatte 7 angeordnet. Durch diese Anordnung ist es möglich, dass sich die elektrische Energiequelle 9 in Bezug auf die Höhenrichtung 12 des Kraftfahrzeugschlüssels 1 zumindest über einen Höhenteilabschnitt 31 der Leiterplatte 7 erstreckt. Bei den dargestellten Ausführungsformen entspricht der Höhenteilabschnitt 31 der Dicke 32 der Leiterplatte 7, wobei es alternativ auch denkbar wäre, dass sich die elektrische Energiequelle 9 nur über einen Teilabschnitt der Dicke in Höhenrichtung 12 erstreckt. Diese Ausgestaltung, bei der der Höhenteilabschnitt 31 der Dicke 32 der Leiterplatte 7 entspricht, führt zu der geringsten Bauhöhe, da sich hierbei die Leiterplatte 7 in Höhenrichtung 12 nicht über die Dicke 33 der elektrischen Energiequelle 9 hinaus erstreckt, wie beispielsweise aus den Figuren 7 und 16 in Verbindung mit den Figuren 2 bzw. 9 ersichtlich ist. Durch die Maßnahme, dass die elektrische Energiequelle 9 seitlich neben der Leiterplatte 7 angeordnet ist und dass die elektrische Energiequelle 9 und die Leiterplatte 7 zumindest abschnittsweise auf der gleichen Ebene 34 in Bezug auf die Höhenrichtung 12 angeordnet sind, ist eine Einsparung von Bauhöhe von bis zu 3,5mm möglich. Die Leiterplatte 7 und die elektrische Energiequelle 9 erstrecken sich folglich in Höhenrichtung 12 parallel zueinander, so dass sich deren einzelne Bauhöhen nicht aufaddieren. Vielmehr liegt bei den dargestellten Ausführungsformen die Höhenerstreckung (Höhenrichtung 12) der Leiterplatte 7 innerhalb der Höhenerstreckung (Höhenrichtung 12) der elektrischen Energiequelle 9, so dass die größte Dicke (in diesem Fall die Dicke 33 der elektrischen Energiequelle 9) maßgebend für die gesamte Bauhöhe des Kraftfahrzeugschlüssels 1 ist. Da die Dicke 33 der elektrischen Energiequelle 9 im Allgemeinen eine größere Höhenerstreckung 12 als die der Leiterplatte 7 aufweist, orientiert sich die Bauhöhe des Kraftfahrzeugschlüssels 1 an der Dicke 33 der elektrischen Energiequelle 9.

Bei den beiden Ausführungsformen stellt das erste Kontaktelement 14 einen Minus-Kontakt zur elektrischen Energiequelle 9 her, wohingegen das zweite Kontaktelement 15 einen Positiv-Kontakt zur elektrischen Energiequelle 9 herstellt. Mit der vorliegenden Erfindung ist eine Montage aller für den Kraftfahrzeugschlüssel 1 erforderlichen Bauteile in einem einzigen Gehäuseelement 2 möglich, so dass zur Endmontage nur noch die Abdeckung 3 an dem Gehäuseelement 2 anzubringen ist, was beispielsweise über eine Rastverbindung oder alternativ über eine Schweißverbindung erfolgen kann. Insgesamt vereinfacht sich mit der wie vorstehend beschriebenen Ausgestaltung des Kraftfahrzeugschlüssels 1 durch die Unterbaugruppe der Zusammenbau.

Bei beiden vorstehend beschriebenen Ausführungsformen des Kraftfahrzeugschlüssels 1 ist die Leiterplatte 7 über eine formschlüssige und kraftschlüssige Verbindung, die eine Heißverstemm-Verbindung ist, mit dem Gehäuseelement 2 verbunden.

Soweit vorstehend bei den beiden Ausführungsformen gleiche Bezugszeichen verwendet werden, betreffen diese jeweils identische oder gleiche Elemente oder Bauteile, so dass die einmalige Beschreibung der Elemente oder Bauteile einer Ausführungsform auch für die übrigen Ausführungsformen gilt.

Die vorstehend beschriebene Erfindung ist selbstverständlich nicht auf die beschriebenen und dargestellten Ausführungsformen beschränkt. Es ist ersichtlich, dass an den in der Zeichnung dargestellten Ausführungsformen zahlreiche, dem Fachmann entsprechend der beabsichtigten Anwendung naheliegende Abänderungen vorgenommen werden können, ohne dass dadurch der Bereich der Erfindung verlassen wird. Beispielsweise können statt einer Heißverstemm-Verbindung alternativ auch andere Verbindungstechniken eingesetzt werden, wie zum Beispiel eine Schraubverbindung. Zur Erfindung gehört alles dasjenige, was in den Ansprüchen enthalten ist, einschließlich dessen, was abweichend von den konkreten Ausführungsbeispielen für den Fachmann naheliegt.

## Patentansprüche

1. Kraftfahrzeugschlüssel (1) mit
einem Gehäuse (4),
einer in dem Gehäuse (4) untergebrachten Leiterplatte (7), auf welcher zumindest ein elektronisches Bauteil (8) befestigt ist,
zumindest einem mit der Leiterplatte (7) in Wirkverbindung stehenden Tastenelement (5), das an dem Gehäuse (4) angebracht ist,
einer elektrischen Energiequelle (9) zum Betrieb des zumindest einen elektronischen Bauteils (8) und
einem ersten Kontaktelement (14) und einem zweiten Kontaktelement (15), die die elektrische Energiequelle (9) mit der Leiterplatte (7) elektrisch koppeln,
wobei die elektrische Energiequelle (9) seitlich neben der Leiterplatte (7) angeordnet ist und
die elektrische Energiequelle (9) sich in Bezug auf die Höhenrichtung (12) des Kraftfahrzeugschlüssels (1) zumindest über einen Höhenteilabschnitt (31) der Leiterplatte (7) erstreckt,
wobei das erste Kontaktelement (14) einen Kontaktabschnitt (19) mit elastisch bewegbaren Kontaktflügeln (20) aufweist, welche die elektrische Energiequelle (9) an einem Oberflächenabschnitt (21) kontaktieren,
wobei sich zwischen dem Kontaktabschnitt (19) des ersten Kontaktelements (14) und der Leiterplatte (7) eine freitragende Brückenleitung (23) erstreckt, welche an der Leiterplatte (7) befestigt ist und den Kontaktabschnitt (19) und die Leiterplatte (7) elektrisch verbindet,
wobei die freitragende Brückenleitung (23) einen Höhenunterschied zwischen dem Kontaktabschnitt (19) und der Leiterplatte (7) überbrückt,
wobei eine Stützgeometrie (22) den Kontaktabschnitt (19) des ersten Kontaktelements (14) derart abstützt, dass die Stützgeometrie (22) die freitragende Brückenleitung (23) vor Beschädigung, Deformation oder unerwünschter Verbiegung schützt, und wobei die Stützgeometrie (22), das erste Kontaktelement (14), das zweite Kontaktelement (15) und die Leiterplatte (7) eine gemeinsam transportierbare und verbaubare Unterbaugruppe bilden, welche in das Gehäuseelement (2) eingebaut ist.

2. Kraftfahrzeugschlüssel (1) nach Anspruch 1, **dadurch gekennzeichnet, dass** die Stützgeometrie (22) ein Stützbügel (28) ist, der an wenigstens einem Gehäuseelement (2) befestigbar oder abstützbar ist.

3. Kraftfahrzeugschlüssel (1) nach Anspruch 2, **dadurch gekennzeichnet, dass** die Leiterplatte (7) und die Stützgeometrie (22) über eine formschlüssige und/oder kraftschlüssige und/oder stoffschlüssige Verbindung, vorzugsweise eine Heißverstemm-Verbindung, miteinander verbunden sind.

4. Kraftfahrzeugschlüssel (1) nach Anspruch 2 3-oder 3, **dadurch gekennzeichnet, dass** die Stützgeometrie (22) mit dem Gehäuseelement (2) über eine Rastverbindung (29, 30) verbunden ist.

5. Kraftfahrzeugschlüssel (1) nach einem der Ansprüche 2 bis 4, **dadurch gekennzeichnet, dass** der Kontaktabschnitt (19) des ersten Kontaktelements (14) über eine formschlüssige und/oder kraftschlüssige und/oder stoffschlüssige Verbindung, vorzugsweise eine Heißverstemm-Verbindung, mit der Stützgeometrie (22) verbunden ist.

6. Kraftfahrzeugschlüssel (1) nach Anspruch 1, **dadurch gekennzeichnet, dass** das mit der Leiterplatte (7) verbundene Ende (24) der Brückenleitung (23) eine U-förmig ausgebildete Kantung (25) aufweist, von der der von dem Kontaktabschnitt (19) weg weisende Schenkel (26) an der Leiterplatte (7), vorzugsweise über eine Lötverbindung, befestigt ist.

7. Kraftfahrzeugschlüssel (1) nach einem der vorhergehenden Ansprüche, **dadurch gekennzeichnet, dass** das zweite Kontaktelement (15) federnd und spangenförmig ausgebildete Kontaktarme (16) aufweist, welche die elektrische Energiequelle (9) an einem Umfangsabschnitt (17) kontaktieren.

8. Kraftfahrzeugschlüssel (1) nach Anspruch 7, **dadurch gekennzeichnet, dass** das zweite Kontaktelement (15) an einer Längskante (18) der Leiterplatte (7) befestigt ist, wobei die Leiterplatte (7) die Kontaktarme (16) abstützt.

9. Kraftfahrzeugschlüssel (1) nach einem der vorhergehenden Ansprüche, **dadurch gekennzeichnet, dass** der Höhenteilabschnitt (31) der Dicke (32) der Leiterplatte (7) entspricht.

10. Kraftfahrzeugschlüssel (1) nach einem der vorhergehenden Ansprüche, **dadurch gekennzeichnet, dass** die Leiterplatte (7) über eine formschlüssige und/oder kraftschlüssige und/oder stoffschlüssige Verbindung, vorzugsweise eine Heißverstemm-Verbindung, mit einem Gehäuseelement (2) verbunden ist.

## Claims

1. A motor vehicle key (1) having
a housing (4),
a printed circuit board (7) accommodated in the housing (4), on which at least one electronic component (8) is mounted,
at least one pushbutton element (5) which is operatively connected to the printed circuit board (7) and mounted on the housing (4),
an electrical energy source (9) for operating the at least one electronic component (8) and
a first contact element (14) and a second contact element (15) that electrically couple the electrical energy source (9) to the printed circuit board (7),
wherein the electrical energy source (9) is arranged at the side next to the printed circuit board (7) and
the electrical energy source (9) a solution is extends over at least a height subsection (31) of the printed circuit board (7) relative to the height direction (12) of the motor vehicle key (1),
wherein the first contact element (14) has a contact section (19) with elastically movable contact fins (20) which contact the electrical energy source (9) on a surface section (21),
wherein a self-supporting bridge connector (23) which is attached to the printed circuit board (7) extends between the contact section (19) of the first contact element (14) and the printed circuit board (7), assuring an electrical connection between the contact section (19) and the printed circuit board (7),
wherein the self-supporting bridge connector (23) bridges a height difference between the contact section (19) and the printed circuit board (7),
wherein a support geometry (22) supports the contact section (19) of the first contact element (14) in such manner that the support geometry (22) protects the self-supporting bridge connector (23) from damage, deformation or undesirable bending, and
wherein the support geometry (22), the first contact element (14), the second contact element (15) and the printed circuit board (7) form a subassembly that can be transportable and fitted together, which is installed in the housing element (2).

2. The motor vehicle key (1) according to Claim 1, **characterized in that** the support geometry (22) is a support bracket (28) which can be attached to or braced against at least one housing element (2).

3. The motor vehicle key (1) according to Claim 2, **characterized in that** the printed circuit board (7) and the support geometry (22) are connected to each other via a positive and/or non-positive and/or material connection, preferably a heat staking connection.

4. The motor vehicle key (1) according to Claim 2 of 3, **characterized in that** the support geometry (22) is connected to the housing element (2) via a detent connection (29, 30).

5. The motor vehicle key (1) according to any one of Claims 2 to 4, **characterized in that** the contact section (19) of the first contact element (14) is connected to the support geometry (22) via a positive and/or non-positive and/or material connection, preferably a heat staking connection.

6. The motor vehicle key (1) according to Claim 1, **characterized in that** the end (24) of the bridge connector (23) which is connected to the printed circuit board (7) has a U-shaped folded portion (25), of which the leg (26) pointing away from the contact section (19) is affixed to the printed circuit board (7), preferably by means of a solder joint.

7. The motor vehicle key (1) according to any one of the preceding claims, **characterized in that** the second contact element (15) has resilient, clasp-shaped contact arms (16) which contact the electrical energy source (9) at a peripheral section (17).

8. The motor vehicle key (1) according to Claim 7, **characterized in that** the second contact element (15) is fastened to a longitudinal edge (18) of the printed circuit board (7), wherein the printed circuit board (7) braces the contact arms (16).

9. The motor vehicle key (1) according to any one of the preceding claims, **characterized in that** the height subsection (31) corresponds to the thickness (32) of the printed circuit board (7).

10. The motor vehicle key (1) according to any one of the preceding claims, **characterized in that** the printed circuit board (7) is connected to a housing element (2) via a positive and/or non-positive and/or material connection, preferably a heat staking connection.

## Revendications

1. Clé de véhicule automobile (1) avec
un boîtier (4),
une carte de circuits imprimés (7) incorporée dans le boîtier (4) sur laquelle est fixé au moins un composant électronique (8),
au moins un élément à touches (5) en liaison fonctionnelle avec la carte de circuits imprimés (7), qui est monté sur le boîtier (4),
une source d'énergie électrique (9) pour faire fonctionner au moins un composant électronique (8) et un premier élément de contact (14) et un deuxième élément de contact (15), qui couplent électriquement la source d'énergie électrique (9) à la carte de circuits imprimés (7),
sachant que la source d'énergie électrique (9) est disposée latéralement près de la carte de circuits imprimés (7), et
sachant que la source d'énergie électrique (9) s'étend par rapport à la direction en hauteur (12) de la clé de véhicule automobile (1) au moins sur une section de partie en hauteur (31) de la carte de circuits imprimés (7),
sachant que le premier élément de contact (14) comporte une section de contact (19) avec des ailettes de contact (20) élastiquement mobiles, lesquelles mettent en contact la source d'énergie électrique (9) avec une section de surface (21),
sachant qu'un conduit de pontage (23) saillant s'étend entre la section de contact (19) du premier élément de contact (14) et la carte de circuits imprimés (7), lequel est fixé sur la carte de circuits imprimés (7) et relie électriquement la section de contact (19) et la carte de circuits imprimés (7),
sachant que le conduit de pontage (23) saillant relie par pontage une différence de hauteur entre la section de contact (19) et la carte de circuits imprimés (7),
sachant qu'une géométrie d'appui (22) soutient la section de contact (19) du premier élément de contact (14) de telle manière que la géométrie d'appui (22) protège le conduit de pontage (23) saillant contre tout endommagement, toute déformation ou tout pliage indésirable, et
sachant que la géométrie d'appui (22), le premier élément de contact (14), le deuxième élément de contact (15) et la carte de circuits imprimés (7) forment un sous-module transportable et transformable en commun, lequel est incorporé dans l'élément de boîtier (2).

2. Clé de véhicule automobile (1) selon la revendication 1, **caractérisée en ce que** la géométrie d'appui (22) est un étrier de support (28), qui peut être fixé ou appuyé sur au moins un élément de boîtier (2).

3. Clé de véhicule automobile (1) selon la revendication 2, **caractérisée en ce que** la carte de circuits imprimés (7) et la géométrie d'appui (22) sont reliées l'une à l'autre par une liaison à conformité de forme et/ou conformité de force et/ou conformité de matière, de préférence un raccord maté à chaud.

4. Clé de véhicule automobile (1) selon la revendication 2 ou 3, **caractérisée en ce que** la géométrie d'appui (22) est reliée à l'élément de boîtier (2) par un raccord encliquetable (29, 30).

5. Clé de véhicule automobile (1) selon l'une quelconque des revendications 2 à 4, **caractérisée en ce que** la section de contact (19) du premier élément de contact (14) est relié à la géométrie d'appui (22) par une liaison à conformité de forme et/ou conformité de force et/ou conformité de matière, de préférence un raccord maté à chaud.

6. Clé de véhicule automobile (1) selon la revendication 1, **caractérisée en ce que** l'extrémité (24) du conduit de pontage (23), reliée à la carte de circuits imprimés (7) comporte un pliage (25) constitué en forme de U par lequel la branche (26) s'écartant de la section de contact (19) est fixée à la carte de circuits imprimés (7), de préférence par le biais d'une liaison par brasage.

7. Clé de véhicule automobile (1) selon l'une quelconque des revendications précédentes, **caractérisée en ce que** le deuxième élément de contact (15) comporte des bras de contact (16) constitués élastiques et en forme de barrette, lesquels mettent en contact la source d'énergie électrique (9) avec une section périphérique (17) .

8. Clé de véhicule automobile (1) selon la revendication 7, **caractérisée en ce que** le deuxième élément de contact (15) est fixé à un bord longitudinal (18) de la carte de circuits imprimés (7), sachant que la carte de circuits imprimés (7) soutient les bras de contact (16).

9. Clé de véhicule automobile (1) selon l'une quelconque des revendications précédentes, **caractérisée en ce que** la section de partie en hauteur (31) correspond à l'épaisseur (32) de la carte de circuits imprimés (7).

10. Clé de véhicule automobile (1) selon l'une quelconque des revendications précédentes, **caractérisée en ce que** la carte de circuits imprimés (7) est reliée à un élément de boîtier (2) par une liaison à conformité de forme et/ou conformité de force et/ou conformité de matière, de préférence un raccord maté à chaud.
